Europäisches Patentamt

European Patent Office

Office européen des brevets

(19)

(11) Veröffentlichungsnummer: **0 045 275**
A1

# (12) EUROPÄISCHE PATENTANMELDUNG

(21) Anmeldenummer: 81730060.1

(22) Anmeldetag: 29.06.81

(51) Int. Cl.³: **H 01 B 7/28**

(30) Priorität: **29.07.80 DE 3029077**

(43) Veröffentlichungstag der Anmeldung: **03.02.82**
**Patentblatt 82/5**

(84) Benannte Vertragsstaaten: **AT BE FR GB IT NL SE**

(71) Anmelder: **SIEMENS AKTIENGESELLSCHAFT Berlin
und München, Postfach 22 02 61,
D-8000 München 22 (DE)**

(72) Erfinder: **Otto, Manfred, Reichssportfeldstrasse 16,
D-1000 Berlin 19 (DE)**

(54) **Längswasserdichtes Starkstromkabel mit mehrdrähtigen kunststoffisolierten Leitern.**

㊼ Neben der Längsdichtigkeit von kunststoffisolierten Kabeln wird in zunehmendem Maße auch die Längsdichtigkeit von einzelnen kunststoffisolierten Leitern (10) gefordert, was Probleme aufwirft, wenn diese Leiter (10) mehrdrähtig ausgebildet sind. Eine einfache in der Fertigung herzustellende Wassersperre wird gemäß der Erfindung dadurch bewirkt, daß die einzelnen Drähte (11,12) in bestimmten Längsabständen auf ein kurzes Stück von einer Masse bzw. einem Schlauchstück (13) umhüllt werden, die bereits bei geringen Temperaturdifferenzen plastisch wird.

SIEMENS AKTIENGESELLSCHAFT

Berlin und München

Unser Zeichen

VPA 80 P 4729 )E

**Längswasserdichtes Starkstromkabel mit mehrdrähtigen kunststoffisolierten Leitern**

Die Erfindung bezieht sich auf ein längswasserdichtes Starkstromkabel mit mehrdrähtigen kunststoffisolierten Leitern und mit in vorbestimmten Längsabständen mit Sperren, die eine Längsausbreitung von in die Isolierung eingedrungenem Wasser verhindern.

Bei kunststoffummantelten Adern oder Seelen besteht bei einer Beschädigung der Isolierung die Gefahr, daß sich eindringende Feuchtigkeit in Längsrichtung der Ader bzw. der Seele ausbreiten kann, so daß ein größerer Abschnitt des Kabels oder einer Ader volläuft, weil kunststoffisolierte Seelen oder Adern der eindringenden Feuchtigkeit keinen Widerstand entgegensetzen. Das gleiche gilt für die ebenfalls aus Kunststoff bestehenden Beilauf- und Zwickelfüllungen. Bei Starkstromkabeln mit kunststoffisolierten Adern, die beispielsweise an einem Hang schrägverlaufend verlegt sind, besteht die Möglichkeit, daß bei einem Fehler in der Isolierung eindringendes Wasser innerhalb der Kabelseele bzw. -ader entlanglaufen und einen Durchschlag zur Folge haben kann.

Es ist aus der DE-AS 12 71 800 bekannt, in Nachrichtenkabeln mit kunststoffisolierten Adern in bestimmten Abständen Längssperren aus einem plastischen oder aufschäumbaren Material als Feuchtigkeitsbarriere einzubringen, um eine größere Ausdehnung des im Fehlerfalle eingedrungenen Wassers zu verhindern. Das Einbringen solcher Längssperren in die Kabelseele und insbesondere in Kabeladern unterbricht jedoch den normalen Fertigungsfluß. Von den Starkstromkabelbeziehern wird aber in zunehmendem Maße auch die Längswasserdichtigkeit der Adern

Gre 3 Sdt/25.07.1980

0045275

gefordert.

Aufgabe der Erfindung ist es daher, durch eine Verbesserung der Kabelkonstruktion das Einbringen dieser Sperren so einfach zu gestalten, daß der kontinuierliche Fertigungsfluß nicht unterbrochen oder nur geringfügig behindert wird. Diese Aufgabe wird gemäß der Erfindung dadurch gelöst, daß als Wassersperren innerhalb einer Ader mehrere der den Leiter bildenden Drähte diskontinuierlich auf einer geringen Länge von einer Masse umgeben sind, die bereits bei geringer Temperaturdifferenz plastisch ist.

Durch das diskontinuierliche Umgeben von einzelnen der den Leiter bildenden Drähte mit einer solchen plastisch verformbaren Masse wird die Längsausbreitung von eingedrungenem Wasser mit Sicherheit an diesen Sperrstellen unterbrochen. Der Fertigungsfluß wird dagegen beim Eindringen dieser Masse in keiner Weise behindert, da sie lediglich in vorbestimmten Längsabständen kaum vor dem Verseilnippel um einige der den Leiter bildenden Drähte herumgespritzt zu werden braucht.

Bei einer bevorzugten konstruktiven Ausgestaltung der Erfindung besteht die die Drähte umgebende Masse aus kurzen, in Längsrichtung aufgeschlitzten Schlauchstücken aus Gummi oder einem plastischen Material. In diesem Fall wird die Masse also außerhalb der Fertigungslinie vorgeformt zu Schlauchstücken oder Röhrchen, die in Längsrichtung aufgeschlitzt sind und daher mit wenigen Handgriffen um die Drähte herumgelegt werden können. Als besonders vorteilhaft erweist sich eine Konstruktion, bei der jeder zweite Draht eines Leiters auf einer kurzen Länge von der einspritzbaren Masse oder den kurzen, aufgeschlitzten Schlauchstücken umgeben ist. Bei einer ausreichenden Bemessung der Wanddicke wird nämlich die Abdichtung der benachbarten, nicht umhüllten Drähte mit sichergestellt.

Verwendet man lagenverseilte, mehrdrähtige Leiter, kann man bevorzugt so vorgehen, daß die Drähte der ersten Lage teilweise von einer einspritzbaren Masse, die Drähte der anderen Lagen dagegen teilweise von kurzen, aufgeschlitzten Schlauchstücken umgeben sind. Dies ist deshalb besonders vorteilhaft, weil beim Aufbringen von Schlauchstücken auf die innere aus 1 + 6 Drähten bestehende Lage größere Schwierigkeiten entstehen, so daß es besser ist, hier die nicht verformte Masse aufzuspritzen. Dagegen kann man Fertigungsvorteile für die übrigen Lagen in Anspruch nehmen, bei denen es einfacher ist, die vorgefertigten Schlauchstücke um die Drähte herumzulegen.

Die Anbringung von Wassersperren bei lagenverseilten, mehrdrähtigen Leitern kann noch dadurch weiter vereinfacht werden, wenn man die Drähte der ersten Lage teilweise von einer einspritzbaren Masse und jeden Verseilverband nach einer Lagenverseilung mit einer einspritzbaren Masse oder mit einem kurzen, aufgeschlitzten Schlauchstück umgibt.

Die Erfindung wird anhand der in der Zeichnung schematisch dargestellten und nachfolgend beschriebenen Ausführungsbeispiele im einzelnen erläutert.

In der Zeichnung zeigt:

Fig. 1  einen Querschnitt durch einen mehrdrähtigen Leiter aus 1 + 6 Drähten vor und

Fig. 2  nach dem Verdichten

Fig. 3 und 4  Varianten zu den Figuren 1 und 2

Fig. 5  einen Querschnitt durch einen lagenverseilten, mehrdrähtigen Leiter.

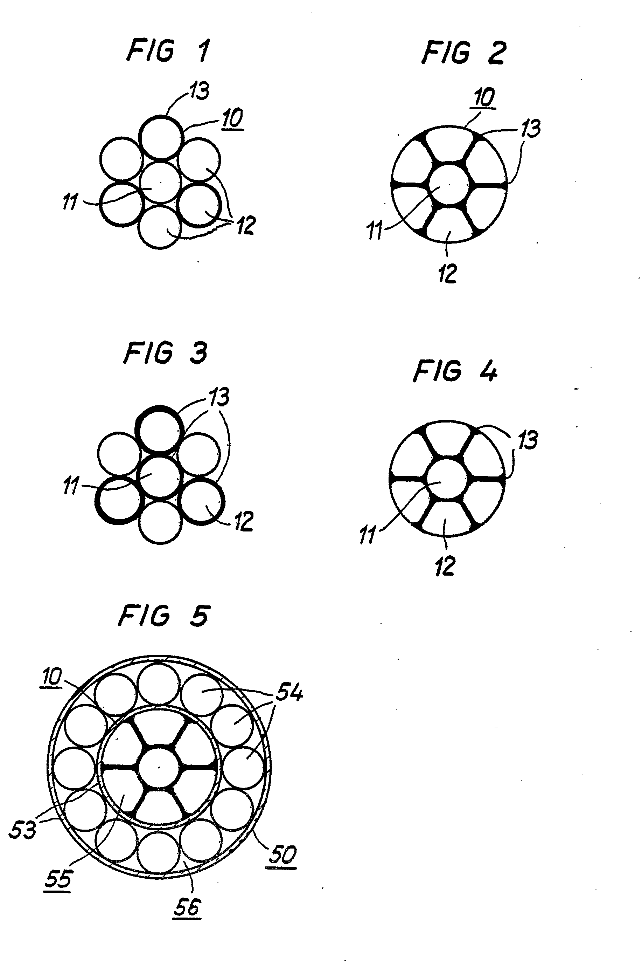

In Fig. 1 ist ein Querschnitt durch einen mehrdrähtigen Leiter 10 dargestellt, der aus einem Kerndraht 11 und sechs weiteren, den Kerndraht umgebenden Drähten 12 aufgebaut ist. Jeder zweite der äußeren Drähte 12 ist in vorbestimmten Längsabständen, die etwa das 100- bis 200fache des Leiterdurchmessers betragen, auf einem Kernstück seiner Länge, die etwa 50- bis 150fache seines Durchmessers beträgt, von einer Masse 13 umgeben, die bereits bei geringen während des Fertigungsvorganges auftretenden Temperaturdifferenzen plastisch wird. Die Masse 13 kann durch Umspritzen der Einzeldrähte 12 aufgebracht werden. Es ist aber auch möglich, die Masse in vorgefertigter Form, d.h. in Form eines kurzen aufgeschlitzten Schlauchstückes 13 aufzubringen. Dabei wird die Dicke der Masse bzw. des Schlauchstückes 13 so bemessen, daß nach dem Verdichtungsvorgang (dargestellt in Fig. 2) die die Längswasserdichtigkeit bewirkende Masse 13 alle Hohlräume zwischen den Einzeldrähten 11, 12 ausfüllt.

In den Figuren 3 und 4 ist der gleiche Leiteraufbau wie in den Figuren 1 und 2 dargestellt, lediglich mit dem Unterschied, daß hier auch der Kerndraht 11 mit der Masse bzw. dem Schlauchstück 13 umhüllt ist. In diesem Fall kann die Dicke der Masse etwas geringer als im Falle der Figur 1 bemessen werden, weil der gleiche Verteilungszustand angestrebt wird, wie die Identität der Figuren 2 und 4 erkennen läßt.

In Figur 5 ist ein Querschnitt durch einen lagenverseilten, mehrdrähtigen Leiter 50 dargestellt, bei dem die aus 1 + 6 Drähten bestehende Kernlage 55 mit dem Leiter 10 nach dem Verdichten (gemäß der Figur 1) übereinstimmt. Um diese Kernlage herum ist ein die ganze Lage umschließendes, in Längsrichtung aufgeschlitztes Schlauchstück 53 gelegt, dessen Masse die gleichen Eigenschaften aufweist wie die Masse bzw. das Schlauchstück 13. Darauf aufgeseilt sind die zwölf Drähte 54 der zweiten Lage 56, die ebenfalls einem Verdichtungsvorgang unterworfen werden. Bei allen weiteren Lagen wird entsprechend verfahren, d.h. jede Lage wird von einem gemeinsamen, aufgeschlitzten Schlauchstück 53 umgeben, dessen Dicke so bemessen ist, daß die Masse in alle Zwickel eindringen kann. Natürlich kann auch jeder zweite Draht 54 einer
neuen Lage mit einem Einzelschlauchstück umhüllt werden.

5 Figuren
5 Ansprüche

Patentansprüche

1. Längswasserdichtes Starkstromkabel mit mehrdrähtigen kunststoffisolierten Leitern und mit in vorbestimmten Längsabständen mit Sperren, die eine Längsausbreitung von in die Isolierung eingedrungenem Wasser verhindern, d a d u r c h   g e k e n n z e i c h n e t , daß als Wassersperren innerhalb einer Ader mehrere der den Leiter (10,50) bildenden Drähte (11,12,51,54) diskontinuierlich auf einer geringen Länge von einer Masse (13) umgeben sind, die bereits bei geringer Temperaturdifferenz plastisch ist.

2. Längswasserdichtes Starkstromkabel nach Anspruch 1, d a d u r c h   g e k e n n z e i c h n e t , daß die die Drähte (11,12) umgebende Masse (13) aus kurzen, in Längsrichtung aufgeschlitzten Schlauchstücken (13) aus Gummi oder einem plastischen Material besteht.

3. Längswasserdichtes Starkstromkabel nach Anspruch 1 oder 2, d a d u r c h   g e k e n n z e i c h n e t , daß wenigstens jeder zweite Draht (12,54) eines Leiters (10,50) auf einer kurzen Länge von der einspritzbaren Masse (13) oder den kurzen, aufgeschlitzten Schlauchstücken (13) umgeben ist.

4. Längswasserdichtes Starkstromkabel nach Anspruch 1,2 oder 3, d a d u r c h   g e k e n n z e i c h n e t , daß bei lagenverseilten, mehrdrähtigen Leitern (50) die Drähte (51) der ersten Lage (55) teilweise von einer einspritzbaren Masse (13), die Drähte (54) der anderen Lagen (56) dagegen teilweise von kurzen, aufgeschlitzten Schlauchstücken (53) umgeben sind.

5. Längswasserdichtes Starkstromkabel nach Anspruch 1,2 oder 3, d a d u r c h   g e k e n n z e i c h n e t , daß bei lagenverseilten, mehrdrähtigen Leitern (50) die Drähte (51) der ersten Lage (55) teilweise von einer einspritzbaren Masse (13,53) umgeben sind und jeder
Verseilverband nach einer Lagenverseilung von einer einspritzbaren Masse (13,53) oder einem kurzen, aufgeschlitzten Schlauchstück (53) umgeben ist.

FIG 1

FIG 2

FIG 3

FIG 4

FIG 5

0045275

Nummer der Anmeldung

EP 81730060.1

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 808 438 (GUTEN-HOFFNUNGSHÜTTE)<br><br>+ Seite 6, Zeile 22 - Seite 9, Zeile 1 +<br><br>-- | 1-5 |
| | PATENT ABSTRACTS OF JAPAN, un-examined applications, section E, Band 1, Nr. 133, 4. November 1977<br>THE PATENT OFFICE JAPANESE GOVERNMENT,<br>Seite 6169, E 77<br><br>+ Kokai Nr. 52-68 985 (FURUKAWA) +<br><br>---- | 1-5 |

### KLASSIFIKATION DER ANMELDUNG (Int Cl.)

H 01 B 7/28

### RECHERCHIERTE SACHGEBIETE (Int. Cl.)

H 01 B 7/00
H 01 B 9/00
H 01 B 13/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 14-10-1981 | KUTZELNIGG |

EPA form 1503.1 06.78